(19) Europäisches Patentamt / European Patent Office / Office européen des brevets

(11) **EP 3 601 819 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(21) Anmeldenummer: **18715560.1**

(22) Anmeldetag: **23.03.2018**

(51) Int Cl.:
*F16C 19/38* (2006.01)        *F16C 33/36* (2006.01)

(86) Internationale Anmeldenummer:
**PCT/EP2018/057487**

(87) Internationale Veröffentlichungsnummer:
**WO 2018/177946 (04.10.2018 Gazette 2018/40)**

(54) **WÄLZLAGERANORDNUNG UND WINDKRAFTANLAGE**

ROLLING BEARING ARRANGEMENT AND WIND TURBINE

ENSEMBLE PALIER À ROULEMENT ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2017 DE 102017106962**

(43) Veröffentlichungstag der Anmeldung:
**05.02.2020 Patentblatt 2020/06**

(73) Patentinhaber:
• **thyssenkrupp rothe erde Germany GmbH**
**44137 Dortmund (DE)**
• **thyssenkrupp AG**
**45143 Essen (DE)**

(72) Erfinder: **BUSEMANN, Nico**
**59065 Hamm (DE)**

(74) Vertreter: **thyssenkrupp Intellectual Property GmbH**
**ThyssenKrupp Allee 1**
**45143 Essen (DE)**

(56) Entgegenhaltungen:
EP-A1- 1 870 606        WO-A1-2007/095953
JP-A- 2005 147 331        JP-A- 2006 177 446

• **"DIN ISO 281 Beiblatt 4:2003-04. Waelzlager - Dynamische Tragzahlen und nominelle Lebensdauer - Verfahren zur Berechnung der modifizierten Referenz-Lebensdauer fuer allgemein belastete Waelzlager = Rolling bearings - Dynamic load ratings and rating life - Methods for calculation of the modified refer", DIN ISO 281 BEIBLATT 4, DIN, DE, Bd. DIN ISO 281 Beiblatt 4, 1. Januar 2003 (2003-01-01), Seiten 441-468, XP009505177,**
• **Schaeffler Technologies Gmbh & Co. Kg: "Kegelrollenlager", , 1. August 2014 (2014-08-01), XP055472313, Gefunden im Internet: URL:https://www.schaeffler.de/remotemedien /media/_shared_media/08_media_library/01_p ublications/schaeffler_2/brochure/download s_1/pke_de_de.pdf [gefunden am 2018-05-03]**
• **Skf: "The Power of Knowledge Engineering", , 1. Juni 2015 (2015-06-01), XP055472323, Gefunden im Internet: URL:http://www.skf.com/binary/49-291738/15 835_DE_Upgraded_Explorer_4rTRB-Brochure.p d f [gefunden am 2018-05-03]**

EP 3 601 819 B1

**Beschreibung**

**Stand der Technik**

Die vorliegende Erfindung geht aus von einer Wälzlageranordnung für eine Windkraftanlage aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Kegelrollenlager mit ersten Kegelrollen und ein zweites Kegelrollenlager mit zweiten Kegelrollen angeordnet ist.

Solche Wälzlageranordnungen sind aus dem Stand der Technik hinlänglich bekannt. Beispielsweise offenbart die Druckschrift DE 10 2014 106 558 A1 eine Lageranordnung zur drehbaren Verbindung eines Innenrings mit einem Außenring, wobei der Innenring und der Außenring mittels zweier axial zueinander versetzter Kegelrollenlager gelagert sind, so dass der Au-ßenring gegenüber dem Innenring drehbar gelagert ist. Wenn der Außenring gegenüber dem Innenring oder der Innenring gegenüber dem Außenring gedreht wird, wälzen der Außenring und der Innenring mit ihren Laufbahnen auf den Kegelrollen der beiden Kegelrollenlager ab. Die beiden Kegelrollenlager sind dabei entweder in einer o-förmigen Anordnung oder in einer x-förmigen Anordnung relativ zueinander positioniert. Es wird in der Druckschrift ferner erwähnt, dass diese Lageranordnung zur Lagerung einer Rotorwelle einer Windkraftanlage eingesetzt werden kann. Eine ähnliche Lageranordnung ist ferner aus der Druckschrift DE 10 2007 049 087 A1 bekannt. Die Ausbildung und Formgebung der Kegelrollen erfolgt typischerweise entsprechend der deutschen DIN-Norm 26281. In der DIN-Norm 26281 von November 2010 wird in Abschnitt 6.5 die Ausbildung des Rollenprofils der Kegelrolle eines Kegelrollenlagers durch eine Profilfunktion beschrieben. Auch in den Katalogen "Kegelrollenlager" der Schaeffler Technologies GmbH & Co. KG aus August 2014 und "Offen oder geschlossen - Vierreihige SKF Explorer Kegelrollenlager für Arbeitswalzen" der SKF Gruppe aus Juni 2015 sind logarithmische Rollenprofile für Kegelrollenlager beschrieben.

Derartige Wälzlageranordnungen werden beispielsweise in Form von sogenannten Großwälzlagern zur Lagerung der Rotorwelle einer Windkraftanlage verwendet. Windkraftanlagen weisen üblicherweise einen Turm und eine auf dem Turm drehbar angeordnete und als Maschinenträger fungierende Gondel auf. Die in der Gondel angeordnete Rotorwelle ist an einem Ende mit einer Rotornabe verbunden, welche die vom Wind angetriebenen Rotorblätter trägt, während das andere Ende über ein etwaiges Getriebe direkt oder indirekt mit einem Generator zur Stromerzeugung gekoppelt ist.

Aus dem zitierten Stand der Technik ist bekannt, die Rotorwelle mittels der zweireihigen Kegelrollenlager zu lagern, um sowohl die axialen, als auch die radialen Kräfte aufzunehmen. Die beiden Kegelrollenlager sind dabei symmetrisch aufgebaut. Durch die bei einer Windkraftanlage auf das Rotorlager einwirkende asymmetrische Lastverteilung (Windkraft einerseits und Kippkräfte andererseits), werden die beiden symmetrischen Kegelrollenlager nachteiligerweise ungleichmäßig belastet und nutzen sich daher auch ungleich ab. Ferner orientiert man sich bei der Dimensionierung der Kegelrollenlager stets an den höchsten zu erwartenden Kräften, so dass eines der beiden Lager in unnötiger Weise zu stark dimensioniert wird.

Die Druckschrift DE 10 2014 104 862 A1 schlägt daher vor, die Wälzkörper in den beiden Kegelrollenlagern unterschiedlich zu dimensionieren, um sie an die bei Windkraftanlagen auftretenden ungleichmäßigen Belastungen einzeln anzupassen. Beispielsweise soll dasjenige Kegelrollenlager, welches näher an der mit den Rotorflügeln versehenen Rotornabe angeordnet ist, größer dimensioniert und somit eine höhere Lebensdauer aufweisen, als das andere Kegelrollenlager, welches sich näher am Generator befindet. Auch aus JP 2006/177446 A, EP 1 870 606 A1, JP 2005/147331 A und WO 2007/095953 A1 sind asymmetrisch ausgebildete doppelreihige Kegelrollenlager bekannt.

Nachteilig an dieser Herangehensweise ist, dass bei jeder Anpassung und Optimierung der einzelnen Wälzkörper auch die Laufbahnen im Innenring und Außenring entsprechend geändert und angepasst werden müssen. Hierdurch ändert sich häufig auch die Gesamtgeometrie der Wälzlageranordnung, welche sodann ebenfalls entsprechend angepasst und neu aufgebaut werden muss. Möglicherweise müssen infolge der geänderten Gesamtgeometrie auch die Lageraufnahmen jeweils modifiziert werden. Solche "Einzelanfertigungen" sind daher vergleichsweise aufwändig und teuer.

Die Asymmetrie hinsichtlich der Anforderungen an das jeweilige Kegelrollenlager wird ferner noch durch unterschiedliche Betriebsarten der Windkraftanlage verstärkt. Im Normalbetrieb der Windkraftanlage (rotierende Rotornabe) wird beispielsweise das der Rotornabe zugewandte Kegelrollenlager stärker abgenutzt, so dass hier die Herausforderung insbesondere in der maximalen Lebensdauer des Lagers und weniger in seiner maximalen Tragkraft liegt. Bei einer Abschaltung der Windkraftanlage (Rotornabe steht still) wegen extremen Wetters, wie beispielsweise einem Orkan, muss das dem Generator zugewandte Kegelrollenlager jedoch extreme Lastspitzen aufnehmen. Diese Lastspitzen treten zwar nur selten auf, aber sind dafür sehr hoch, so dass bei diesem Kegelrollenlager insbesondere die Anforderung in einer maximalen Tragkraft und weniger in einer maximalen Lebensdauer liegt.

## Offenbarung der Erfindung

Es ist also eine Aufgabe der vorliegenden Erfindung eine Wälzlageranordnung und eine Windkraftanlage mit einer Wälzlageranordnung bereitzustellen, bei welcher die im Zusammenhang mit dem Stand der Technik genannten Nachteile nicht auftreten, sondern stattdessen eine einfache individuelle Anpassung und Optimierung jedes der beiden Kegelrollenlager an die zu erwartenden Anforderungen erlaubt.

Gelöst wird diese Aufgabe mit einer Wälzlageranordnung für eine Windkraftanlage aufweisend einen Außenring und einen zumindest teilweise innerhalb des Außenrings gelagerten Innenring, wobei der Außenring und der Innenring um eine Drehachse relativ zueinander drehbar sind, wobei zwischen dem Außenring und dem Innenring ein erstes Kegelrollenlager mit ersten Kegelrollen und ein zweites Kegelrollenlager mit zweiten Kegelrollen angeordnet ist, dadurch gekennzeichnet, dass im unbelasteten Zustand der Wälzlageranordnung die ersten Kegelrollen ein erstes logarithmisches Rollenprofil und die zweiten Kegelrollen ein von dem ersten logarithmischen Rollenprofil abweichendes zweites logarithmisches Rollenprofil aufweisen.

Die erfindungsgemäße Vorrichtung hat gegenüber dem Stand der Technik den Vorteil, dass nicht zwangsläufig die gesamte Dimensionierung der Kegelrollen und der zugehörigen Laufbahnen angepasst wird, sondern dass das Rollenprofil der ersten und zweiten Kegelrollen unterschiedlich ausgebildet und somit an die im Zusammenhang mit dem Stand der Technik erwähnten unterschiedlichen Anforderungen adaptiert und optimiert ist. Eine Änderung des Rollenprofils kann vorteilhafterweise realisiert werden, ohne dass sich die Geometrien der Laufbahnen oder überhaupt des Innen- und Außenrings ändern, so dass die erfindungsgemäße Wälzlageranordnung vergleichsweise kostengünstig und einfach zu implementieren ist. Insbesondere kann somit dem Umstand Rechnung getragen werden, dass beide Kegelrollenlager aufgrund der Asymmetrie einer Windkraftanlage und aufgrund unterschiedlicher Betriebsmodi einer Windkraftanlage unterschiedliche Anforderungen erfüllen müssen. So können beispielsweise die ersten Kegelrollen im Hinblick auf die Langlebigkeit des ersten Kegelrollenlagers bei "normalen" Belastungen und im Normalbetrieb (rotierende Rotornabe) optimiert werden, während die zweiten Kegelrollen im Hinblick auf maximale Tragfähigkeit des zweiten Kegelrollenlagers bei extremen und kurzzeitigen Lastspitzen im abgeschalteten Modus (Rotornabe rotiert nicht und ist insbesondere festgestellt) optimiert werden. Die erfindungsgemäße Wälzlageranordnung ist insbesondere als Rotor- und/oder Hauptlager der Rotorwelle der Windkraftanlage vorgesehen.

Mit anderen Worten: Herkömmlicherweise werden häufig zwei gleich dimensionierte Kegelrollenlager als Rotorlager in einer Windkraftmaschine verwendet. Dabei stellt sich das Problem, dass die Kegelrollenlager nach dem maximal zu erwartenden Lastfall dimensioniert werden müssen, da das Rotorlager auch einen Orkan schadlos überstehen können muss. Das Kegelrollenlager, welches der Rotornabe zugewandt ist und im normalen Betrieb hauptsächlich belastet wird, wird in diesem normalen Betrieb aber stets deutlich unterhalb dieser maximal zu erwartenden Lastspitze belastet, so dass eine zu große Profilierung (auch als Konvexität oder Bombierung bezeichnet) der Kegelrollen in diesem Lager zu einem erhöhten Verschleiß in der Laufbahn führt, da sich diese Kegelrollen aufgrund der geringeren Belastung zu wenig deformieren und somit nur eine verkleinerte Kontaktfläche zur Laufbahn ausbilden. Eine geringere Profilierung oder Verkleinerung des Lagers kann aber nicht gewählt werden, da andernfalls der maximal zu erwartende Lastfall nicht abdeckt ist. Insofern wird erfindungsgemäß dasjenige Kegelrollenlager, welches im Normalbetrieb die Hauptlast trägt (hier das erste Kegelrollenlager), mit kleinerer Profilierung ausgebildet, damit die Langlebigkeit dieses Kegelrollenlagers im Normalbetrieb, d.h. bei normalen und geringeren Lasten, optimiert wird. Zudem wird das andere Kegelrollenlager, welches aufgrund seiner Position hauptsächlich bei einem Stillstand der Windkraftanlage und in einem kritischen Maximallastfall (bspw. bei einem Orkan) mit hohen Lasten belastet wird (hier das zweite Kegelrollenlager), mit größerer Profilierung ausgebildet, so dass sich in diesem Lager bei einer starken Deformation der Kegelrollen aufgrund einer hohen Last jeweils eine große Kontaktfläche zwischen den Kegelrollen und der Laufbahn ausbildet und somit eine geringere Flächenpressung bei hohen Lasten erzielt wird.

Vorteilhafte Ausgestaltungen und Weiterbildungen der Erfindung sind den Unteransprüchen, sowie der Beschreibung unter Bezugnahme auf die Zeichnungen entnehmbar.

Erfindungsgemäß ist vorgesehen, dass das erste logarithmische Rollenprofil im unbelasteten Zustand der Profilfunktion

$$P_1(x) = c_1 \cdot D_{we1} \cdot \log \frac{1}{1 - \left(\dfrac{2 \cdot x}{L_{we1}}\right)^2}$$

genügt, wobei $D_{we1}$ dem maximalen Durchmesser der ersten Kegelrollen (in Millimetern) und $L_{we1}$ der effektiven Länge der ersten Kegelrollen (in Millimetern) entsprechen und wobei der Logarithmuskoeffizient $c_1$ der ersten Kegelrollen ungleich eines Referenzlogarithmuskoeffizient $c_0$ von 0,00045 ist. Die Profilfunktion P(x) gibt das Profil der Kegelrolle in Millimetern an. Die Profilfunktion und die in die Profilfunktion einzusetzenden Parameter sind dem Fachmann grundsätzlich und nicht zuletzt aus der DIN-Norm 26281 wohlbekannt. Bei der erfindungsgemäßen Wälzlageranordnung wird nun ein Logarithmuskoeffizient $c_1$ bei den ersten Kegelrollen verwendet, welcher von dem üblichen Referenzlogarithmuskoeffizient $c_0$ abweicht.

Das zweite logarithmische Rollenprofil genügt analog im unbelasteten Zustand der Profilfunktion

$$P_2(x) = c_2 \cdot D_{we2} \cdot \log \frac{1}{1 - \left(\dfrac{2 \cdot x}{L_{we2}}\right)^2}$$

wobei $D_{we2}$ dem maximalen Durchmesser der zweiten Kegelrollen und $L_{we2}$ der effektiven Länge der zweiten Kegelrollen entsprechen und wobei der Logarithmuskoeffizient $c_2$ der zweiten Kegelrollen ungleich des Referenzlogarithmuskoeffizient $c_0$ von 0,00045 ist. Bei der erfindungsgemäßen Wälzlageranordnung wird nun ein Logarithmuskoeffizient $c_2$ bei den zweiten Kegelrollen verwendet, welcher von dem üblichen Referenzlogarithmuskoeffizient $c_0$ abweicht.

Vorzugsweise unterscheiden sich die ersten und zweiten Kegelrollen nur in ihrer Rollenprofilierung. Das bedeutet, dass die ersten und zweiten Kegelrollen abgesehen von der unterschiedlichen Rollenprofilierung ansonsten eine identische Geometrie aufweisen. Vorzugsweise ist somit der maximale Durchmesser $D_{we2}$ der zweiten Kegelrollen gleich dem maximalen Durchmesser $D_{we1}$ der ersten Kegelrollen ($D_{we2} = D_{we1}$) und die effektive Länge $L_{we2}$ der zweiten Kegelrollen gleich der effektiven Länge $L_{we1}$ der ersten Kegelrollen ($L_{we2} = L_{we1}$).

Erfindungsgemäß wird durch die Wahl eines entsprechenden Logarithmuskoeffizient $c_{1,2}$ für die ersten und zweiten Kegelrollen, welcher insbesondere von dem Referenzlogarithmuskoeffizient $c_0$ abweicht, speziell die für diese Kegelrollen zu erwartende Belastungssituation berücksichtigt werden.

Erfindungsgemäß ist vorgesehen, dass der Logarithmuskoeffizient $c_1$ der ersten Kegelrollen kleiner als der Referenzlogarithmuskoeffizient $c_0$ ist und der Logarithmuskoeffizient $c_2$ der zweiten Kegelrollen größer als der Referenzlogarithmuskoeffizient $c_0$ ist.

Somit werden diejenigen Kegelrollen, welche insbesondere eine hohe Lebensdauer im Normalbetrieb unter "normalen" Lasten aufweisen sollen, mit einem etwas reduzierten Logarithmuskoeffizient c versehen, so dass diese Kegelrollen eine etwas reduzierte Konvexität (auch als Profilierung oder Bombierung bezeichnet) im unbelasteten Zustand aufweisen und somit eine längere Lebensdauer bei niedrigeren Lasten haben. Dies wird dadurch erzielt, dass die reduzierte Konvexität dazu führt, dass ihre Laufflächen bei niedrigeren Lasten und somit geringerer Verformung der Kegelrolle flächig auf den Laufflächen abwälzt. Ferner werden diejenigen Kegelrollen, welche insbesondere eine hohe Tragfähigkeit bei kurzzeitig auftretenden Lastspitzen im abgeschalteten Modus bieten sollen, mit einem etwas erhöhten Logarithmuskoeffizient c versehen, so dass diese Kegelrollen eine etwas erhöhte Konvexität (auch als Profilierung oder Bombierung bezeichnet) im unbelasteten Zustand aufweisen. Vorteilhafterweise wird hierdurch erzielt, dass die unter Extremlast im kritischen Lastfall stark deformierte Kegelrolle eine höhere Kontaktfläche mit der Laufbahn aufweist und damit eine reduzierte Flächenpressung in diesem kritischen Lastfall hervorgerufen wird.

Gemäß einer weiteren bevorzugten Ausführungsform der vorliegenden Erfindung ist vorgesehen, dass der Logarithmuskoeffizient $c_1$ des ersten Kegelrollenlagers zwischen 0,0001 und 0,0004, vorzugsweise zwischen 0,00025 und 0,00035 und besonders bevorzugt bei im Wesentlichen 0,0003 liegt. Es hat sich gezeigt, dass ein Logarithmuskoeffizient $c_1$ innerhalb der vorstehend definierten Bereiche insbesondere für jenes Kegelrollenlager besonders vorteilhaft ist, welches im Normalbetrieb eine hohe Lebensdauer aufweisen soll. Hierbei handelt es sich insbesondere um dasjenige Kegelrollenlager, welches in axialer Richtung auf der der Rotornabe der Windkraftanlage zugewandten Seite der Wälzlageranordnung angeordnet ist. Alternativ könnte das erste Kegelrollenlager aber auch dasjenige Kegelrollenlager sein, welches in axialer Richtung auf der dem Generator der Windkraftanlage zugewandten Seite der Wälzlageranordnung angeordnet ist.

Gemäß einer weiteren bevorzugten Ausführungsform der vorliegenden Erfindung ist vorgesehen, dass der Logarithmuskoeffizient $c_2$ des zweiten Kegelrollenlagers zwischen 0,0005 und 0,0009, vorzugsweise zwischen 0,0006 und 0,0008 und besonders bevorzugt bei im Wesentlichen 0,0007 liegt. Es hat sich gezeigt, dass ein Logarithmuskoeffizient $c_2$ innerhalb der vorstehend definierten Bereiche insbesondere für jenes Kegelrollenlager besonders vorteilhaft ist, welches im abgeschalteten Betrieb hohe Lastspitzen aufzunehmen hat. Hierbei handelt es sich insbesondere um dasjenige Kegelrollenlager, welches in axialer Richtung auf der dem Generator der Windkraftanlage zugewandten Seite der Wälzlageranordnung angeordnet ist. Alternativ könnte das zweite Kegelrollenlager aber auch dasjenige Kegelrollenlager sein, welches in axialer Richtung auf der der Rotornabe der Windkraftanlage zugewandten Seite der Wälzlageranordnung angeordnet ist.

Gemäß einer weiteren bevorzugten Ausführungsform der vorliegenden Erfindung ist vorgesehen, dass das erste und das zweite Kegelrollenlager derart relativ zueinander positioniert sind, dass die ersten und zweiten Kegelrollen in einem zur Drehachse parallelen Längsschnitt durch die Wälzlageranordnung x-förmig angeordnet sind.

Gemäß einer weiteren bevorzugten Ausführungsform der vorliegenden Erfindung ist vorgesehen, dass das erste und das zweite Kegelrollenlager derart zueinander ausgerichtet sind, dass die ersten und zweiten Kegelrollen in einem zur Drehachse parallelen Längsschnitt durch die Wälzlageranordnung o-förmig angeordnet sind.

Vorzugsweise ist der Innenring und/oder der Außenring mehrteilig ausgebildet.

Ein weiterer Gegenstand der vorliegenden Erfindung ist eine Windkraftanlage aufweisend eine Rotornabe, an welcher wenigstens ein Rotorblatt befestigt ist, und einen Generator, welcher zur Umsetzung von kinetischer Energie in elektrische Energie ausgebildet ist, wobei ein Rotor des Generators drehfest mit der Rotornabe über eine Rotorwelle der Windkraftanlage verbunden ist, wobei die Rotornabe und/oder die Rotorwelle mittels der erfindungsgemäßen Wälzlageranordnung gelagert ist.

Vorzugsweise ist der Innenring drehfest mit der Rotorwelle verbunden. Alternativ wäre aber auch denkbar, dass der Außenring drehfest mit der Rotorwelle verbunden ist.

Gemäß einer weiteren bevorzugten Ausführungsform der vorliegenden Erfindung ist vorgesehen, dass das erste Kegelrollenlager auf einer der Rotornabe zugewandten Seite der Wälzlageranordnung und das zweite Kegelrollenlager auf einer dem Generator zugewandten Seite der Wälzlageranordnung angeordnet ist. Denkbar ist, dass das erste Kegelrollenlager somit das sogenannte Traglager bildet, während das zweite Kegelrollenlager somit das Haltelager darstellt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

**Kurze Beschreibung der Zeichnungen**

Figur 1      zeigt eine schematische Schnittbildansicht einer Wälzlageranordnung gemäß einer beispielhaften ersten Ausführungsform der vorliegenden Erfindung.

Figur 2      zeigt eine schematische Schnittbildansicht einer Wälzlageranordnung gemäß einer beispielhaften zweiten Ausführungsform der vorliegenden Erfindung.

Figuren 3a bis 3c      zeigen schematisch erste und zweite Kegelrollen der Wälzlageranordnung gemäß der ersten und zweiten Ausführungsform der vorliegenden Erfindung im Vergleich zu einem Wälzkörper des Standes der Technik

Figur 4      zeigt eine schematische Schnittbildansicht einer Wälzlageranordnung gemäß einer beispielhaften dritten Ausführungsform der vorliegenden Erfindung.

Figur 5      zeigt eine schematische Ansicht einer Windkraftanlage aufweisend eine Wälzlageranordnung gemäß der beispielhaften dritten Ausführungsform der vorliegenden Erfindung.

**Ausführungsformen der Erfindung**

In den verschiedenen Figuren sind gleiche Teile stets mit den gleichen Bezugszeichen versehen und werden daher in der Regel auch jeweils nur einmal benannt bzw. erwähnt.

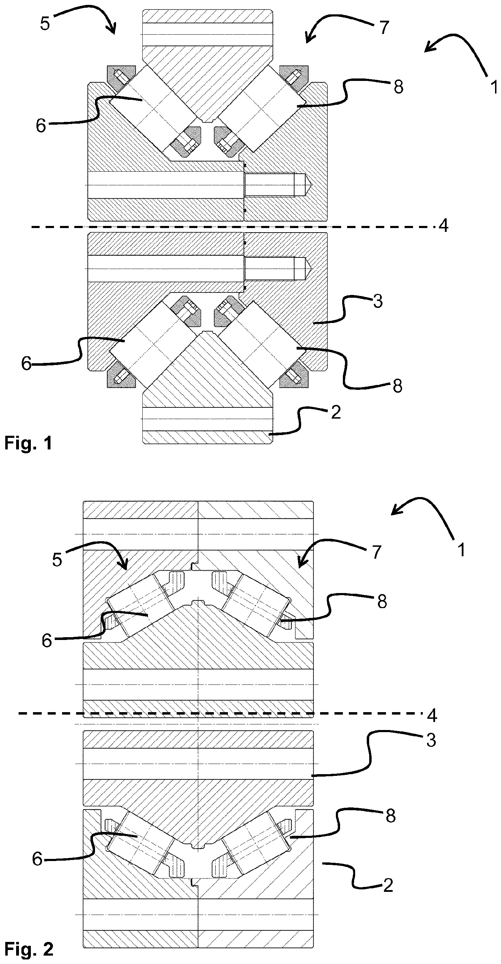

In **Figur 1** ist eine schematische Schnittbildansicht einer Wälzlageranordnung 1 zur Rotorwellenlagerung in einer Windkraftanlage gemäß einer beispielhaften ersten Ausführungsform der vorliegenden Erfindung dargestellt.

Die Wälzlageranordnung 1 umfasst einen Außenring 2 und einen Innenring 3. Der Außenring 2 und der Innenring 3 sind um eine Drehachse 4 relativ zueinander drehbar, beispielsweise kann entweder der Innenring 3 gegenüber dem Außenring 2 oder der Außenring 2 gegenüber dem Innenring 3 gedreht werden. Der Innenring 3 ist in radialer Richtung innerhalb des Außenrings 2 angeordnet und überlappt in axialer Richtung zumindest teilweise mit dem Außenring 2.

Zwischen dem Außenring 2 und dem Innenring 3 sind ein erstes Kegelrollenlager 5 und ein zweites Kegelrollenlager 7 ausgebildet. Das erste und das zweite Kegelrollenlager 5, 7 sind in axialer Richtung zueinander versetzt angeordnet.

Das erste Kegelrollenlager 5 umfasst als Wälzkörper eine Mehrzahl erster Kegelrollen 6. Die ersten Kegelrollen 6 sind in einer umlaufenden Reihe von Wälzkörpern angeordnet, die jeweils vorzugsweise durch Käfige oder Distanzstücke voneinander beabstandet sind. Die ersten Kegelrollen 6 sind in radialer Richtung jeweils zwischen einer am Außenring 2 ausgebildeten umlaufenden Laufbahn und einer am Innenring 3 ausgebildeten umlaufenden Laufbahn angeordnet sind, so dass die ersten Kegelrollen 6 mit ihren Laufflächen jeweils auf den Laufbahnen abwälzen. Die Rotationsachsen der ersten Kegelrollen 6 sind dabei gegenüber der Drehachse 4 der Wälzlageranordnung 1 jeweils geneigt.

Das zweite Kegelrollenlager 7 ist analog aber im Wesentlichen spiegelverkehrt zum ersten Kegelrollenlager 5 aufgebaut. Das zweite Kegelrollenlager 7 umfasst als Wälzkörper eine Mehrzahl zweiter Kegelrollen 8. Die zweiten Kegelrollen 8 sind ebenfalls in einer umlaufenden Reihe von Wälzkörpern angeordnet, die jeweils vorzugsweise durch Käfige oder Distanzstücke voneinander beabstandet sind. Die zweiten Kegelrollen 8 sind in radialer Richtung auch jeweils zwischen einer am Außenring 2 ausgebildeten umlaufenden Laufbahn und einer am Innenring 3 ausgebildeten umlaufenden Laufbahn angeordnet sind, so dass die zweiten Kegelrollen 8 mit ihren Laufflächen jeweils auf den Laufbahnen abwälzen. Die Rotationsachsen der zweiten Kegelrollen 8 sind dabei gegenüber der Drehachse 4 der Wälzlageranordnung 1 ebenfalls jeweils geneigt.

Die in Figur 1 illustrierte Schnittdarstellung entspricht einem Schnitt durch die um die Drehachse 4 im Wesentlichen drehsymmetrische Wälzlageranordnung 1 entlang der Drehachse 4. Es ist dabei zu erkennen, dass das erste und zweite Kegelrollenlager 5, 7 bei der Wälzlageranordnung 1 gemäß der ersten Ausführungsform derart zueinander angeordnet sind, dass die ersten und zweiten Kegelrollen 6, 8 in der Schnittdarstellung ein "X" bilden, wobei die Drehachse 4 durch das Zentrum des "X" verläuft. Die gezeigte Anordnung wird gemeinhin als O-Anordnung bezeichnet, da die zur jeweiligen Rotationsachse der Kegelrollen 6, 8 senkrecht verlaufende Kraftfluss (verläuft direkt zwischen den Kontaktflächen mit den Laufbahnen) in der abgebildeten Figur 1 ein "O" bilden.

Die ersten Kegelrollen 6 und die zweiten Kegelrollen 8 haben beide ein logarithmisches Rollenprofil. Die Wälzlageranordnung 1 gemäß der ersten Ausführungsform der vorliegenden Erfindung unterscheidet sich vom Stand der Technik dadurch, dass sich das logarithmische Rollenprofil der ersten Kegelrollen 6 von dem logarithmischen Rollenprofil der zweiten Kegelrollen 8 unterscheidet. Das bedeutet, dass die ersten Kegelrollen 6 eine Konvexität (auch als Profilierung oder Bombierung bezeichnet) aufweisen, die von der Konvexität der zweiten Kegelrollen 8 abweicht. Diese geometrischen Unterschiede sind allerdings zumindest derart gering, dass sie in der Prinzipskizze von Figur 1 mit bloßem Auge nicht ohne Weiteres zu erkennen sind.

Das logarithmische Rollenprofil einer Kegelrolle wird bei Kegelrollenlagern grundsätzlich durch die Profilfunktion $P_0(x)$ beschrieben, welche gemäß Abschnitt 6.5 der deutschen DIN-Norm 26281 (November 2010) die konvexe Oberflächenwölbung der Lauffläche als Funktion der Variablen x in Millimetern beschreibt:

$$P_0(x) = c_0 \cdot D_{we} \cdot \log \frac{1}{1 - \left(\dfrac{2 \cdot x}{L_{we}}\right)^2}$$

Dabei ist $D_{we}$ der maximale Durchmesser der betreffenden Kegelrolle, während $L_{we}$ die effektive Länge der betreffenden Kegelrolle beschreibt. Die Variable $c_0$ steht für eine dimensionslose Konstante, welche die Konvexität beschreibt und daher in der vorliegenden Beschreibung als Logarithmuskoeffizient bezeichnet wird. Aus der genannten DIN-Norm 26281 geht hervor, dass stets ein Logarithmuskoeffizient $c_0$ in Höhe von $c_0 = 0{,}00045$, welcher im Folgenden als Referenzlogarithmuskoeffizient $c_0$ bezeichnet wird, verwendet wird. Die aus dem Stand der Technik bekannten Kegelrollen weisen somit eine bestimmte Konvexität auf.

Die ersten Kegelrollen 6 der Wälzlageranordnung 1 gemäß der vorliegenden Erfindung sind nun derart ausgebildet, dass sich ihre Profilfunktion $P_1(x)$ nicht nur von der Profilfunktion $P_2(x)$ der zweiten Kegelrollen 8 sondern vorzugsweise auch von der Profilfunktion $P_0(x)$ mit einem Referenzlogarithmuskoeffizient $c_0 = 0{,}00045$ unterscheidet. Für die Profilfunktion $P_1(x)$ gilt:

$$P_1(x) = c_1 \cdot D_{we1} \cdot \log \frac{1}{1 - \left(\frac{2 \cdot x}{L_{we1}}\right)^2}$$

mit $c_1 \neq c_2$ und $c_1 \neq c_0$ und $c_0 = 0{,}00045$

$D_{we1}$ steht dabei für den maximalen Durchmesser der ersten Kegelrollen 6, während $L_{we1}$ für die effektive Länge der ersten Kegelrollen 6 steht.

Das Gleiche gilt auch für die zweiten Kegelrollen 8. Auch die zweiten Kegelrollen 8 der Wälzlageranordnung 1 gemäß der vorliegenden Erfindung sind derart ausgebildet, dass sich ihre Profilfunktion $P_2(x)$ nicht nur von der Profilfunktion $P_1(x)$ der ersten Kegelrollen 6 sondern vorzugsweise auch von der Profilfunktion $P_0(x)$ mit einem Referenz-

logarithmuskoeffizient $c_0$ = 0,00045 unterscheidet. Für die Profilfunktion $P_2(x)$ gilt:

$$P_2(x) = c_2 \cdot D_{we2} \cdot \log \frac{1}{1 - \left(\frac{2 \cdot x}{L_{we2}}\right)^2}$$

*mit $c_2 \neq c_1$ und $c_2 \neq c_0$ und $c_0$ = 0,00045*

$D_{we1}$ steht dabei für den maximalen Durchmesser der zweiten Kegelrollen 8, während $L_{we2}$ für die effektive Länge der zweiten Kegelrollen 8 steht.

Der Logarithmuskoeffizient $c_1$ der ersten Kegelrollen 6 ist kleiner als der Referenzlogarithmuskoeffizient $c_0$, während der Logarithmuskoeffizient $c_2$ der zweiten Kegelrollen 8 größer als der Referenzlogarithmuskoeffizient $c_0$ ist. Die ersten Kegelrollen 6 weisen somit eine geringere Konvexität als die zweiten Kegelrollen 8 auf. Zudem weisen die ersten Kegelrollen 6 eine geringere Konvexität als Kegelrollen gemäß einer Profilfunktion mit Referenzlogarithmuskoeffizient $c_0$ = 0,00045 auf. Die zweiten Kegelrollen 8 weisen ferner eine höhere Konvexität als die ersten Kegelrollen 6 und auch eine höhere Konvexität als Kegelrollen gemäß einer Profilfunktion mit Referenzlogarithmuskoeffizient $c_0$ = 0,00045 auf.

Insbesondere ist die Wälzlageranordnung 1 gemäß der ersten Ausführungsform der vorliegenden Erfindung derart ausgebildet, dass der Logarithmuskoeffizient $c_1$ der ersten Kegelrollen 6 zwischen 0,0001 und 0,0004, vorzugsweise zwischen 0,00025 und 0,00035 liegt, während der Logarithmuskoeffizient $c_2$ der zweiten Kegelrollen 8 zwischen 0,0005 und 0,0009, vorzugsweise zwischen 0,0006 und 0,0008 liegt.

Denkbar ist, dass die Wälzlageranordnung 1 als Hauptlager einer Rotorwelle einer Windkraftanlage dient.

In **Figur 2** ist eine schematische Schnittbildansicht einer Wälzlageranordnung 1 gemäß einer beispielhaften zweiten Ausführungsform der vorliegenden Erfindung dargestellt. Die zweite Ausführungsform gleicht im Wesentlichen der anhand von Figur 1 erläuterten ersten Ausführungsform, wobei lediglich das erste und zweite Kegelrollenlager 5, 7 bei der Wälzlageranordnung 1 gemäß der zweiten Ausführungsform derart zueinander angeordnet sind, dass die ersten und zweiten Kegelrollen 6, 8 in der Schnittdarstellung ein "O" anstelle des in Figur 1 gezeigten "X" bilden. Die gezeigte Anordnung wird gemeinhin als X-Anordnung bezeichnet, da die zur jeweiligen Rotationsachse der Kegelrollen 6, 8 senkrecht verlaufende Kraftfluss (verläuft direkt zwischen den Kontaktflächen mit den Laufbahnen) in der abgebildeten Figur 2 ein "X" bilden.

Die Ausbildung und insbesondere die Profilierung der ersten und zweiten Kegelrollen 6, 8 entsprechen der ersten Ausführungsform.

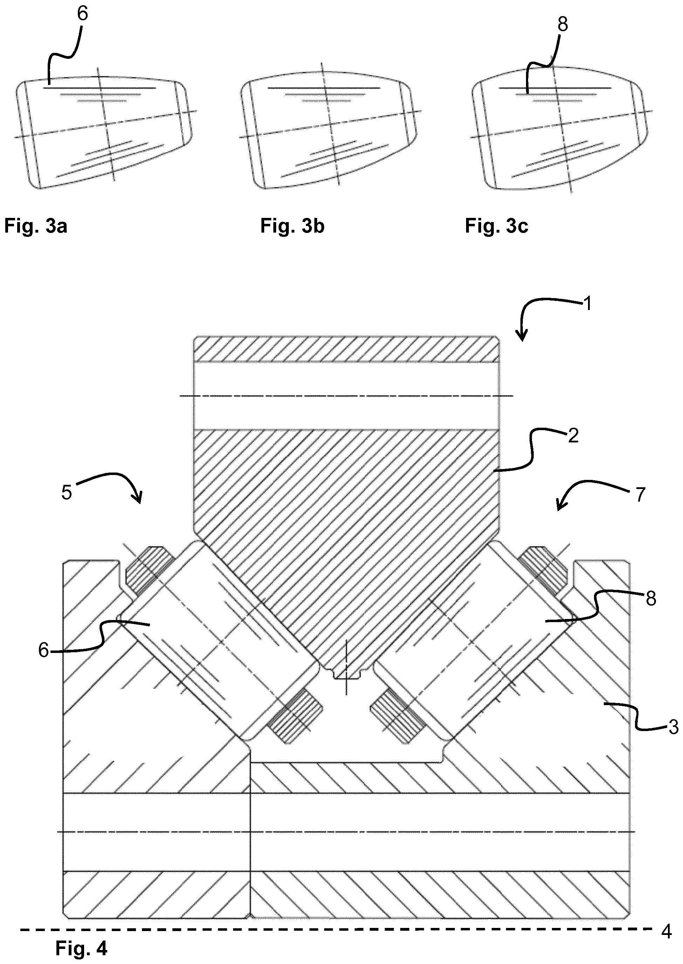

In **Figuren 3a bis 3c** sind nun verschiedene Rollenprofile von Kegelrollen schematisch dargestellt.

In Figur 3a ist eine der ersten Kegelrollen 6 dargestellt, während in Figur 3c eine der zweiten Kegelrollen 8 dargestellt ist. Die beiden Figuren 3a, 3c veranschaulichen, dass die zweiten Kegelrollen 8 aufgrund des im Vergleich zum Logarithmuskoeffizient $c_1$ höheren Logarithmuskoeffizient $c_2$ eine deutlich höhere Konvexität als die ersten Kegelrollen 6 aufweisen. Die Unterschiede in der Konvexität sind normalerweise mit bloßem Auge nur schlecht zu erkennen. Aus diesem Grund wurden die Konvexität in den Figuren 3a, 3b und 3c stark übertrieben dargestellt.

In Figur 3b ist zudem eine aus dem Stand der Technik bekannte typische Kegelrolle mit einem Referenzrollenprofil mit Referenzlogarithmuskoeffizient $c_0$ = 0,00045 illustriert. Die in Figur 3b gezeigte Kegelrolle hat somit das in Abschnitt 6.5 der deutschen DIN-Norm 26281 (November 2010) definierte Rollenprofil.

Der Vergleich der Figur 3b mit den Figuren 3a und 3c zeigt, dass die ersten Kegelrollen 6 eine geringere Konvexität und die zweiten Kegelrollen 8 eine höhere Konvexität als die Kegelrolle mit dem Referenzrollenprofil aufweisen.

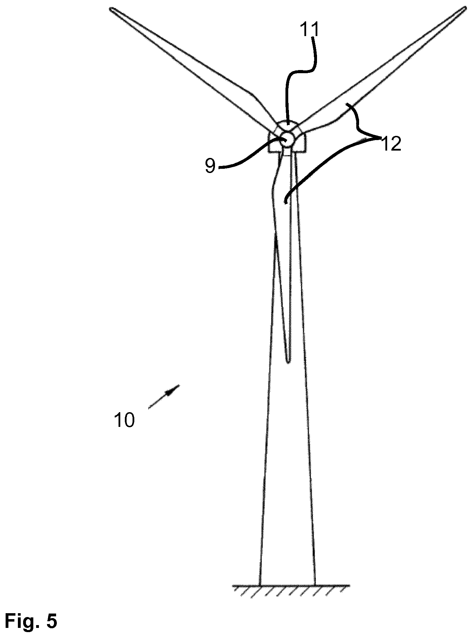

In **Figur 4** ist eine schematische Schnittbildansicht einer Wälzlageranordnung gemäß einer beispielhaften dritten Ausführungsform der vorliegenden Erfindung dargestellt. Die dritte Ausführungsform entspricht der anhand von Figur 1 erläuterten ersten Ausführungsform, wobei der Logarithmuskoeffizient $c_1$ der ersten Kegelrollen 6 im Wesentlichen 0,0003 entspricht, während der Logarithmuskoeffizient $c_2$ der zweiten Kegelrollen 8 im Wesentlichen 0,0007 entspricht. Die Wälzlageranordnung 1 ist dabei Teil der in Figur 5 schematisch illustrierten Windkraftanlage 10 gemäß einer beispielhaften Ausführungsform der vorliegenden Erfindung.

Der Innenring 3 der Wälzlageranordnung 1 ist zweigeteilt ausgebildet und mit einer Rotorwelle der Windkraftanlage fest verbunden. Der Innenring 3 dreht somit gegenüber dem feststehenden Außenring 2. Die Rotorwelle verbindet eine Rotornabe 9 der Windkraftanlage 10 mit dem Rotor eines in einer Gondel 11 der Windkraftanlage 10 angeordneten Generators. An der Rotornabe 9 sind eine Mehrzahl von Rotorblättern 12 befestigt, über welche die Rotornabe 9 mittels Windkraft zur Rotation angetrieben wird. Die Rotationsbewegung wird über die Rotorwelle auf den Rotor des Generators übertragen. Der Generator setzt sodann die kinetische Energie der Rotationsbewegung in elektrische Energie um.

Die Wälzlageranordnung 1 bildet das Hauptlager für die Rotorwelle. Das erste und zweite Kegelrollenlager 5, 7 sind dabei derart positioniert, dass das erste Kegelrollenlager 5 in axialer Richtung der Rotorwelle auf einer der Rotornabe 9 zugewandten Seite der Wälzlageranordnung 1 angeordnet ist, während das zweite Kegelrollenlager 7 in axialer Richtung der Rotorwelle auf einer dem Generator zugewandten Seite der Wälzlageranordnung 1 angeordnet ist.

Aufgrund der höheren Konvexität der zweiten Kegelrollen 8 ist das zweite Kegelrollenlager 7 für die Aufnahme großer Lastspitzen, insbesondere wenn das Windkraftanlage 1 aufgrund von starkem Sturm abgeschaltet ist, ausgebildet, ohne dass die Gefahr besteht, dass die maximal zulässige Pressung in der Laufbahn überschritten wird. Ferner führt die geringere Konvexität der ersten Kegelrollen 6 dazu, dass im Normalbetrieb, d.h. bei geringeren Lasten, ein reduzierter Verschleiß und somit eine maximierte Standzeit erzielt wird.

## BEZUGSZEICHENLISTE

1    Wälzlageranordnung
2    Außenring
3    Innenring
4    Drehachse
5    Erstes Kegelrollenlager
6    Erste Kegelrollen
7    Zweites Kegelrollenlager
8    Zweite Kegelrollen
9    Rotornabe
10   Windkraftanlage
11   Gondel
12   Rotorblätter

## Patentansprüche

1. Wälzlageranordnung (1) für eine Windkraftanlage (10) aufweisend einen Außenring (2) und einen zumindest teilweise innerhalb des Außenrings (2) gelagerten Innenring (3), wobei der Außenring (2) und der Innenring (3) um eine Drehachse (4) relativ zueinander drehbar sind, wobei zwischen dem Außenring (2) und dem Innenring (3) ein erstes Kegelrollenlager (5) mit ersten Kegelrollen (6) und ein zweites Kegelrollenlager (7) mit zweiten Kegelrollen (8) angeordnet ist, **dadurch gekennzeichnet, dass** im unbelasteten Zustand der Wälzlageranordnung (1) die ersten Kegelrollen (6) ein erstes logarithmisches Rollenprofil und die zweiten Kegelrollen (8) ein von dem ersten logarithmischen Rollenprofil abweichendes zweites logarithmisches Rollenprofil aufweisen, wobei das erste logarithmische Rollenprofil im unbelasteten Zustand der Profilfunktion

$$P_1(x) \;=\; c_1 \cdot D_{we1} \cdot \log \frac{1}{1 - \left(\frac{2 \cdot x}{L_{we1}}\right)^2}$$

genügt, wobei $D_{we1}$ dem maximalen Durchmesser der ersten Kegelrollen (6) und $L_{we1}$ der effektiven Länge der ersten Kegelrollen (6) entsprechen und wobei der Logarithmuskoeffizient $c_1$ der ersten Kegelrollen (5) ungleich eines Referenzlogarithmuskoeffizient $c_0$ von 0,00045 ist,
wobei das zweite logarithmische Rollenprofil im unbelasteten Zustand der Profilfunktion

$$P_2(x) \;=\; c_2 \cdot D_{we2} \cdot \log \frac{1}{1 - \left(\frac{2 \cdot x}{L_{we2}}\right)^2}$$

genügt, wobei $D_{we2}$ dem maximalen Durchmesser der zweiten Kegelrollen (8) und $L_{we2}$ der effektiven Länge der zweiten Kegelrollen (8) entsprechen und
wobei der Logarithmuskoeffizient $c_2$ der zweiten Kegelrollen (8) ungleich des Referenzlogarithmuskoeffizient $c_0$ von 0,00045 ist und wobei der Logarithmuskoeffizient $c_1$ der ersten Kegelrollen (6) kleiner als der Referenzlogarithmuskoeffizient $c_0$ ist und der Logarithmuskoeffizient $c_2$ der zweiten Kegelrollen (8) größer als der Referenzlogarithmuskoeffizient $c_0$ ist.

2. Wälzlageranordnung (1) nach dem vorhergehenden Anspruch, wobei der Logarithmuskoeffizient $c_1$ der ersten Kegelrollen (6) zwischen 0,0001 und 0,0004, vorzugsweise zwischen 0,00025 und 0,00035 und besonders bevorzugt bei im Wesentlichen 0,0003 liegt.

3. Wälzlageranordnung (1) nach einem der vorhergehenden Ansprüche, wobei der Logarithmuskoeffizient $c_2$ der zweiten Kegelrollen (8) zwischen 0,0005 und 0,0009, vorzugsweise zwischen 0,0006 und 0,0008 und besonders bevorzugt bei im Wesentlichen 0,0007 liegt.

4. Wälzlageranordnung (1) nach einem der vorhergehenden Ansprüche, wobei sich die ersten und zweiten Kegelrollen (6, 8) nur in ihrer Rollenprofilierung voneinander unterscheiden und insbesondere die gleiche effektive Länge $L_{we1,2}$ und den gleichen maximalen Durchmesser $D_{we1,2}$ aufweisen.

5. Wälzlageranordnung (1) nach einem der vorhergehenden Ansprüche, wobei das erste und das zweite Kegelrollenlager (5, 7) derart relativ zueinander positioniert sind, dass die ersten und zweiten Kegelrollen (6, 8) in einem zur Drehachse (4) parallelen Längsschnitt durch die Wälzlageranordnung (1) x-förmig angeordnet sind.

6. Wälzlageranordnung (1) nach einem der vorhergehenden Ansprüche, wobei das erste und das zweite Kegelrollenlager (5, 7) derart zueinander ausgerichtet sind, dass die ersten und zweiten Kegelrollen (6, 8) in einem zur Drehachse (4) parallelen Längsschnitt durch die Wälzlageranordnung (1) o-förmig angeordnet sind.

7. Windkraftanlage (10) aufweisend eine Rotornabe (9), an welcher wenigstens ein Rotorblatt (12) befestigt ist, und einen Generator, welcher zur Umsetzung von kinetischer Energie in elektrische Energie ausgebildet ist, wobei ein Rotor des Generators drehfest mit der Rotornabe (9) über eine Rotorwelle der Windkraftanlage (10) verbunden ist, **dadurch gekennzeichnet, dass** die Rotornabe (9) und/oder die Rotorwelle mittels der Wälzlageranordnung (1) nach einem der vorhergehenden Ansprüche gelagert ist.

8. Windkraftanlage (10) nach Anspruch 7, wobei der Innenring (3) oder der Außenring (2) drehfest mit der Rotorwelle verbunden ist.

9. Windkraftanlage (10) nach einem der Ansprüche 7 oder 8, wobei das erste Kegelrollenlager (5) auf einer der Rotornabe (9) zugewandten Seite der Wälzlageranordnung (1) und das zweite Kegelrollenlager (6) auf einer dem Generator zugewandten Seite der Wälzlageranordnung (1) angeordnet ist.

## Claims

1. Rolling bearing arrangement (1) for a wind power plant (10) having an outer ring (2) and an inner ring (3) which is mounted at least partially within the outer ring (2), wherein the outer ring (2) and the inner ring (3) are arranged rotatably relative to one another about a rotational axis (4), wherein a first tapered roller bearing (5) with first tapered rollers (6) and a second tapered roller bearing (7) with second tapered rollers (8) are arranged between the outer ring (2) and the inner ring (3), **characterized in that**, in the unloaded state of the rolling bearing arrangement (1), the first tapered rollers (6) have a first logarithmic roller profile and the second tapered rollers (8) have a second logarithmic roller profile which differs from the first logarithmic roller profile, wherein the first logarithmic roller profile satisfies the profile function

$$P_1(x) = c_1 \cdot D_{we1} \cdot log\frac{1}{1 - \left(\frac{2 \cdot x}{L_{we1}}\right)^2}$$

in the unloaded state, wherein $D_{we1}$ corresponds to the maximum diameter of the first tapered rollers (6), and $L_{we1}$ corresponds to the effective length of the first tapered rollers (6), and wherein the logarithm coefficient $c_1$ of the first tapered rollers (5) is different from a reference logarithm coefficient $c_0$ of 0.00045, wherein the second logarithmic roller profile satisfies the profile function

$$P_2(x) = c_2 \cdot D_{we2} \cdot log \dfrac{1}{1 - \left(\dfrac{2 \cdot x}{L_{we2}}\right)^2}$$

in the unloaded state, wherein $D_{we2}$ corresponds to the maximum diameter of the second tapered rollers (8), and $L_{we2}$ corresponds to the effective length of the second tapered rollers (8), and wherein the logarithm coefficient $c_2$ of the second tapered rollers (8) is different from the reference logarithm coefficient $c_0$ of 0.00045, and wherein the logarithm coefficient $c_1$ of the first tapered rollers (6) is smaller than the reference logarithm coefficient $c_0$, and the logarithm coefficient $c_2$ of the second tapered rollers (8) is greater than the reference logarithm coefficient $c_0$

2. Rolling bearing arrangement (1) according to the preceding claim, wherein the logarithm coefficient $c_1$ of the first tapered rollers (6) lies between 0.0001 and 0.0004, preferably between 0.00025 and 0.00035, and particularly preferably at substantially 0.0003.

3. Rolling bearing arrangement (1) according to one of the preceding claims, wherein the logarithm coefficient $c_2$ of the second tapered rollers (8) lies between 0.0005 and 0.0009, preferably between 0.0006 and 0.0008, and particularly preferably at substantially 0.0007.

4. Rolling bearing arrangement (1) according to one of the preceding claims, wherein the first and second tapered rollers (6, 8) differ from one another only in terms of their roller profiling and, in particular, have the same effective length $L_{we1,2}$ and the same maximum diameter $D_{we1,2}$.

5. Rolling bearing arrangement (1) according to one of the preceding claims, wherein the first and the second tapered roller bearing (5, 7) are positioned relative to one another in such a way that the first and second tapered rollers (6, 8) are arranged in an x-shaped manner in a longitudinal section through the rolling bearing arrangement (1), which longitudinal section is parallel to the rotational axis (4).

6. Rolling bearing arrangement (1) according to one of the preceding claims, wherein the first and the second tapered roller bearing (5, 7) are oriented with respect to one another in such a way that the first and second tapered rollers (6, 8) are arranged in an o-shaped manner in a longitudinal section through the rolling bearing arrangement (1), which longitudinal section is parallel to the rotational axis (4).

7. Wind power plant (10) having a rotor hub (9), to which at least one rotor blade (12) is fastened, and a generator which is configured for the conversion of kinetic energy into electric energy, wherein a rotor of the generator is connected fixedly via a rotor shaft of the wind power plant (10) to the rotor hub (9) so as to rotate with it, **characterized in that** the rotor hub (9) and/or the rotor shaft are/is mounted by means of the rolling bearing arrangement (1) according to one of the preceding claims.

8. Wind power plant (10) according to claim 7, wherein the inner ring (3) or the outer ring (2) is connected fixedly to the rotor shaft so as to rotate with it.

9. Wind power plant (10) according to claim 7 or 8, wherein the first tapered roller bearing (5) is arranged on a side of the rolling bearing arrangement (1) which faces the rotor hub (9), and the second tapered roller bearing (6) is arranged on a side of the rolling bearing arrangement (1) which faces the generator.

**Revendications**

1. Ensemble palier à roulement (1) pour une éolienne (10), comprenant une bague extérieure (2) et une bague intérieure (3) montée au moins partiellement à l'intérieur de la bague extérieure (2), dans lequel la bague extérieure (2) et la bague intérieure (3) peuvent tourner l'une par rapport à l'autre autour d'un axe de rotation (4), dans lequel un premier palier à rouleaux coniques (5) doté de premiers rouleaux coniques (6) et un deuxième palier à rouleaux coniques (7) doté de deuxièmes rouleaux coniques (8) sont disposés entre la bague extérieure (2) et la bague intérieure (3), **caractérisé en ce que**, dans l'état non chargé de l'ensemble palier à roulement (1), les premiers rouleaux coniques (6) présentent un premier profil de rouleau logarithmique et les deuxièmes rouleaux coniques (8) présentent un deuxième profil de rouleau logarithmique qui diffère du premier profil de rouleau logarithmique, le premier profil de rouleau logarithmique satisfaisant à la fonction de profil

$$P_1(x) = c_1 \cdot D_{we1} \cdot \log \frac{1}{1 - \left(\frac{2 \cdot x}{L_{we1}}\right)^2}$$

dans l'état non chargé, $D_{we1}$ correspondant au diamètre maximal des premiers rouleaux coniques (6) et $L_{we1}$ correspondant à la longueur effective des premiers rouleaux coniques (6), et le coefficient logarithmique $c_1$ des premiers rouleaux coniques (5) étant différent d'un coefficient logarithmique de référence $C_0$ de 0,00045, le deuxième profil de rouleau logarithmique satisfaisant à la fonction de profil

$$P_2(x) = c_2 \cdot D_{we2} \cdot \log \frac{1}{1 - \left(\frac{2 \cdot x}{L_{we2}}\right)^2}$$

dans l'état non chargé, $D_{we2}$ correspondant au diamètre maximal des deuxièmes rouleaux coniques (8) et $L_{we2}$ correspondant à la longueur effective des deuxièmes rouleaux coniques (8), et
le coefficient logarithmique $C_2$ des deuxièmes rouleaux coniques (8) étant différent du coefficient logarithmique de référence $C_0$ de 0,00045, et le coefficient logarithmique $C_1$ des premiers rouleaux coniques (6) étant inférieur au coefficient logarithmique de référence $C_0$ et le coefficient logarithmique $C_2$ des deuxièmes rouleaux coniques (8) étant supérieur au coefficient logarithmique de référence $C_0$.

2. Ensemble palier à roulement (1) selon la revendication précédente, dans lequel le coefficient logarithmique $C_1$ des premiers rouleaux coniques (6) est compris entre 0,0001 et 0,0004, de préférence entre 0,00025 et 0,00035 et de manière particulièrement préférée est de sensiblement 0,0003.

3. Ensemble palier à roulement (1) selon l'une des revendications précédentes, dans lequel le coefficient logarithmique $C_2$ des deuxièmes rouleaux coniques (8) est compris entre 0,0005 et 0,0009, de préférence entre 0,0006 et 0,0008 et de manière particulièrement préférée est de sensiblement 0,0007.

4. Ensemble palier à roulement (1) selon l'une des revendications précédentes, dans lequel les premiers et deuxièmes rouleaux coniques (6, 8) ne diffèrent les uns des autres que de par leur profilage de rouleau et présentent en particulier la même longueur effective $L_{we1,2}$ et le même diamètre maximal $D_{we1,2}$.

5. Ensemble palier à roulement (1) selon l'une des revendications précédentes, dans lequel le premier et le deuxième palier à rouleaux coniques (5, 7) sont positionnés l'un par rapport à l'autre de telle sorte que les premiers et deuxièmes rouleaux coniques (6, 8) sont disposés en forme de x dans une coupe longitudinale radiale parallèle à l'axe de rotation (4) à travers l'ensemble palier à roulement (1).

6. Ensemble palier à roulement (1) selon l'une des revendications précédentes, dans lequel le premier et le deuxième palier à rouleaux coniques (5, 7) sont orientés l'un par rapport à l'autre de telle sorte que les premiers et deuxièmes rouleaux coniques (6, 8) sont disposés en forme de o dans une coupe longitudinale parallèle à l'axe de rotation (4) à travers l'ensemble palier à roulement (1) .

7. Éolienne (10) comprenant un moyeu de rotor (9) auquel est fixée au moins une pale de rotor (12), et un générateur, lequel est conçu pour la conversion d'énergie cinétique en énergie électrique, dans laquelle un rotor du générateur est relié de manière solidaire en rotation au moyeu de rotor (9) par le biais d'un arbre de rotor de l'éolienne (10), **caractérisée en ce que** le moyeu de rotor (9) et/ou l'arbre de rotor sont montés au moyen de l'ensemble palier à roulement (1) selon l'une des revendications précédentes.

8. Éolienne (10) selon la revendication 7, dans laquelle la bague intérieure (3) ou la bague extérieure (2) est reliée de manière solidaire en rotation à l'arbre de rotor.

9. Éolienne (10) selon l'une des revendications 7 ou 8, dans laquelle le premier palier à rouleaux coniques (5) est disposé sur un côté de l'ensemble palier à roulement (1) tourné vers le moyeu de rotor (9) et le deuxième palier à rouleaux coniques (6) est disposé sur un côté de l'ensemble palier à roulement (1) tourné vers le générateur.

**Fig. 1**

**Fig. 2**

**Fig. 3a**

**Fig. 3b**

**Fig. 3c**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014106558 A1
- DE 102007049087 A1
- DE 102014104862 A1
- JP 2006177446 A
- EP 1870606 A1
- JP 2005147331 A
- WO 2007095953 A1

**In der Beschreibung aufgeführte Nicht-Patentliteratur**

- Kegelrollenlager. Schaeffler Technologies GmbH & Co. KG, August 2014
- Offen oder geschlossen - Vierreihige SKF Explorer Kegelrollenlager für Arbeitswalzen. *SKF Gruppe,* Juni 2015